# EUROPÄISCHE PATENTANMELDUNG

(11) **EP 1 113 246 A2**
(43) Veröffentlichungstag der Anmeldung: **04.07.2001**
(21) Anmeldenummer: 00124614.9
(22) Anmeldetag: 10.11.2000
(51) Int. Cl.: G01D 11/28, G12B 11/02

(54) **Anordnung zum Ausleuchten einer Anzeigevorrichtung mit einem Zifferblatt**

(30) Priorität: 01.12.1999 DE 19957936
(71) Anmelder: Mannesmann VDO Aktiengesellschaft, 60388 Frankfurt am Main (DE)
(72) Erfinder: Neugart, Elmar, Dipl.-Ing. (FH), c/o GDS, Ladybrand 9745 (ZA); Krumm, Eduard, 78052 Villingen-Schwenningen (DE)

(57) **Zusammenfassung**

Für eine Anordnung zum Ausleuchten einer Anzeigevorrichtung mit einem Zifferblatt 1, wobei die Rückseite des Zifferblattes 1 mit Ausnahme eines Durchlichtbereiches 2 ganzflächig opak ist und wobei dieser Durchlichtbereich 2 der Ausbildung einer Skala dient, wird vorgeschlagen, auf der Rückseite des Zifferblattes 1 eine Reflektorschale 3 vorzusehen, deren Formgebung dergestalt ist, daß das von einer Leuchtdiode 4 gegen eine Reflektorwand 5 abgestrahlte Licht über den Durchlichtbereich 2 des Zifferblattes 1 diffus verteilt wird.

## Beschreibung

Die Erfindung betrifft eine Anordnung zum Ausleuchten einer Anzeigevorrichtung mit einem Zifferblatt gemäß dem Oberbegriff des ersten Anspruchs und bezieht sich auf Anzeigevorrichtungen, wie sie in Armaturenbrettern von Kraftfahrzeugen zum Einsatz kommen.

Gattungsgemäße Anzeigevorrichtungen besitzen zumeist ein Zifferblatt, dessen Rückseite mit Ausnahme eines Durchlichtbereiches ganzflächig opak bedruckt ist, wobei dieser Durchlichtbereich der Ausbildung einer Skala dient. Bei einem Zifferblatt mit einem Durchmesser von üblicherweise bis zu 110 mm umspannt der Durchlichtbereich in der Regel einen Winkel zwischen 90° und 220°. Um einen derartigen, verhältnismäßig großen Durchlichtbereich gleichmäßig auszuleuchten, werden zumeist mehrere versetzt angeordnete Lichtquellen eingesetzt, die ihr Licht direkt in Richtung der Rückseite des Zifferblattes abstrahlen. Falls nur eine einzige Lichtquelle zum Einsatz kommt, ordnet man ihr einen massiven Lichtleiter zu, der an der Rückseite des Zifferblattes angeordnet das Licht der Lichtquelle über den Durchlichtbereich verteilt. Als Lichtquellen finden sich heutzutage zunehmend Leuchtdioden.

Dieser Stand der Technik hat jedoch einige Nachteile. Mit zunehmender Anzahl von verwendeten Lichtquellen steigt die Verlustleistung und damit die thermische Erwärmung. Mit steigender Zahl der Lichtquellen steigt auch der Teilepreis derartiger Anzeigevorrichtungen, weil für den Betrieb und die Steuerung jeder Lichtquelle zusätzliche elektrische und elektronische Bauelemente wie Widerstände, Schieberegister usw. benötigt werden. Eine große Anzahl von Bauelementen geht überdies auch mit einer höheren Ausfallwahrscheinlichkeit für das gesamte Beleuchtungssystem einher. Auch Ausgestaltungen von Beleuchtungsanordnungen mit nur einer Lichtquelle und einem zugeordneten Lichtleiter sind relativ teuer, weil für den Lichtleiter Werkzeug-, Material- und Montagekosten anfallen.

Darüber hinaus ist in der Entwicklung und beim Produktionsprozeß ein erheblicher Aufwand zu betreiben, um für ein herkömmliches Zifferblatt einen Rasterdruck festzulegen, der eine gleichmäßige Ausleuchtung des gesamten Zifferblattes sicherstellt, denn das Druckergebnis des Rasterdruckes unterliegt in der Serienfertigung einer breiten Streuung, weil bestimmte Prozeßparameter wie die Farbviskosität, die Verschmutzung der Drucksiebe und die Drucktoleranzen das Druckergebnis in erheblichem Maße negativ beeinflussen können. Wenn die genannten Prozeßparameter nicht einer ständigen Qualitätskontrolle unterliegen, kann eine gleichbleibend hochwertige Ausleuchtungsqualität für derartige in Serienfertigung hergestellte und mit solchen Zifferblättern versehene Anzeigevorrichtungen nicht gewährleistet werden, was sich dann unmittelbar wieder beim Kunden in der Akzeptanz solcher Anzeigevorrichtungen niederschlägt.

Es ist nun die Aufgabe der vorliegenden Erfindung, eine Anordnung zum Ausleuchten einer Anzeigevorrichtung mit einem Zifferblatt aufzuzeigen, bei der der Aufwand zum Erreichen eines gleichmäßig ausgeleuchteten Zifferblattes deutlich reduziert ist.

Die Aufgabe wird durch eine Anordnung zum Ausleuchten einer Anzeigevorrichtung mit einem Zifferblatt mit den Merkmalen des ersten Anspruchs gelöst. Die abhängigen Ansprüche zeigen Ausgestaltungen und Weiterbildungen der gefundenen Lösung.

Die Lösung zeichnet sich dadurch aus, daß bei einer Anordnung zum Ausleuchten einer Anzeigevorrichtung mit einem Zifferblatt, wobei die Rückseite des Zifferblattes mit Ausnahme eines Durchlichtbereiches ganzflächig opak ist und wobei dieser Durchlichtbereich der Ausbildung einer Skala dient, auf der Rückseite des Zifferblattes eine Reflektorschale angeordnet ist, deren Formgebung dergestalt ist, daß das von einer Leuchtdiode gegen eine Reflektionswand abgestrahlte Licht über den Durchlichtbereich des Zifferblattes diffus verteilt wird.

Eine konstruktiv sehr vorteilhafte Lösung für diese Anordnung ergibt sich, wenn die Reflektionswand lotrecht zum Zifferblatt angeordnet ist und durch eine Wandung der Reflektorschale gebildet wird, wobei die Reflektionswand in ihrer in der Ebene des Zifferblattes verlaufenden Kontur kurvenförmig ausgebildet ist und sie das von der Leuchtdiode abgestrahlte Licht gegen einen sektorförmigen Abschnitt des Bodens der Reflektorschale reflektiert, wobei dieser Abschnitt des Bodens zum Zifferblatt gerichtet konkav ausgebildet ist und das Licht zum Durchlichtbereich des Zifferblattes reflektiert.

Eine besonders preisgünstige Lösung erhält man, wenn man die Reflektorschale einstückig aus einem hellen, reflektiven Kunststoff fertigt und die Reflektorschale in ihrer Größe und Kontur so ausbildet, daß sie im wesentlichen nur den Durchlichtbereich des Zifferblattes abdeckt.

Ein besonderer Vorteil der gefundenen Lösung besteht darin, daß das Zifferblatt rückseitig statt des bei konventionellen Anordnungen notwendigen, aufwendig und nur durch mehrere Iterationsschritte zu erreichenden Rasterdruckes lediglich einen weißen Flächendruck aufzuweisen braucht, der druckprozeßtechnisch leicht zu beherrschen ist.

Darüber hinaus ist es auch für das gesamte Beleuchtungssystem vorteilhaft, daß in der Reflektorschale zur Ausleuchtung des die gesamte Skala umfassenden Durchlichtbereiches nur eine einzige Leuchtdiode angeordnet werden muß. Diese Maßnahme vereinfacht spürbar das gesamte Beleuchtungssystem. Dabei ist der Aufwand für die Entwicklung einer geeigneten Geometrie der hier eingesetzten Reflektorschale nur geringfügig größer als bei herkömmlichen gattungsgemäßen Anzeigevorrichtungen.

Anhand von drei Figuren soll die gefundene Lösung nun noch näher erläutert werden. Es zeigen
- Figur 1: ein Zifferblatt einer gattungsmäßen Anzeigevorrichtung in der Draufsicht,
- Figur 2: eine Schnittdarstellung der gefundenen Anordnung und
- Figur 3: die Innenansicht der Reflektorschale.

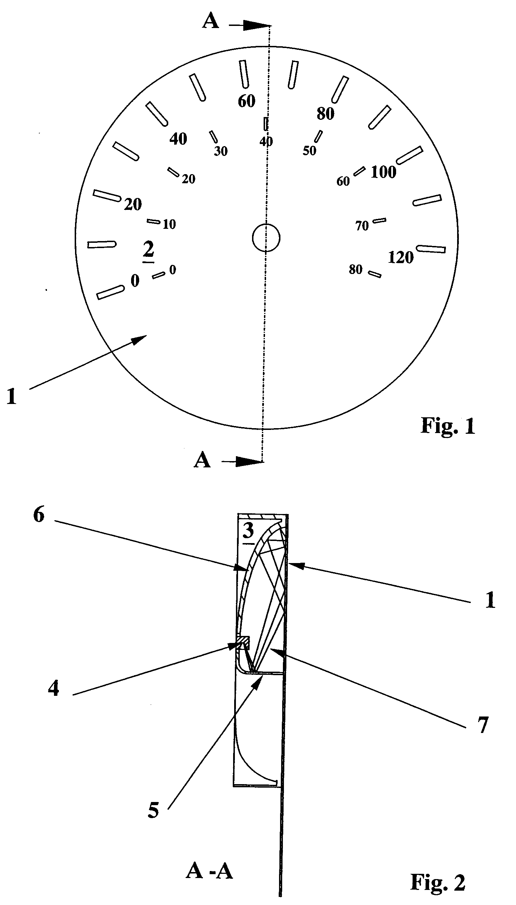

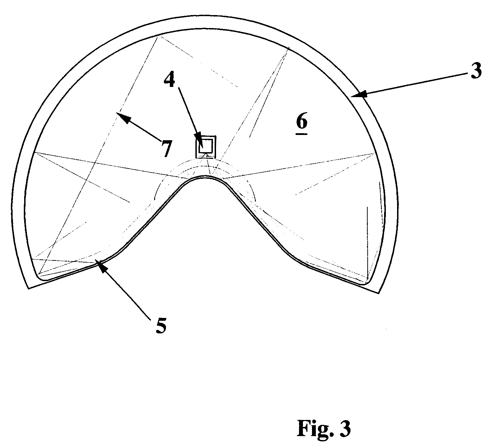

Die **Figur 1** zeigt ein Zifferblatt 1 für eine gattungsmäße Anzeigevorrichtung in der Draufsicht. Das Zifferblatt 1 ist hier als kreisrunde Scheibe dargestellt. Überwiegend in der oberen Hälfte befinden sich über einen Kreisbogen von etwa 220° entlang der Umfangslinie radiale Aussparungen, die die Teilstriche einer Skala bilden. Wie in der Figur 1 gezeigt, ist häufig auch eine Doppelskala für unterschiedliche Maßeinheiten der anzuzeigenden Meßgröße vorgesehen. Den Teilstrichen der Skala sind in überwiegend regelmäßigen Abständen Ziffern zugeordnet, die den Ausschlag eines Zeigers quantifizieren. Auch diese Ziffern sind als lichtdurchlässige Aussparungen in das Zifferblatt 1 eingebracht. Der übrige Teil des Zifferblattes 1 ist aufgrund eines rückseitig flächenhaft aufgetragenen Druckes, der vorzugsweise in weiß ausgeführt wird, opak. Das frontseitige Erscheinungsbild des Zifferblattes 1 kann in beliebiger farblicher Gestaltung je nach Kundenwunsch ausgeführt sein. Die Aussparungen für die Teilstriche der Skala sowie die Aussparungen für die Ziffern, gegebenenfalls ergänzt um Aussparungen zur Angabe einer Maßeinheit für die Meßgröße, bilden in ihrer Gesamtheit einen Durchlichtbereich 2. Der das Zifferblatt 1 überstreichende Zeiger ist hier nicht dargestellt, lediglich der Durchstoßpunkt für die Zeigerachse im Mittelpunkt des Zifferblattes 1. Der in der Figur 1 angedeutete Schnitt A-A vertikal durch die gattungsmäße Anzeigevorrichtung ist in der Figur 2 dargestellt.

Der **Figur 2** ist zu entnehmen, daß bündig an der Rückseite des Zifferblattes 1 eine Reflektorschale 3 angeordnet ist. Zum Erreichen des erfindungsgemäß angestregten Erfolgs reicht es aus, wenn die Reflektorschale 3 im wesentlichen nur den Durchlichtbereich 2 des Zifferblattes 1 abdeckt. Eine Überdeckung der gesamten Rückseite des Zifferblattes 1 durch die Reflektorschale 3 ist nicht erforderlich, sofern nicht über der gesamten Fläche des Zifferblattes 1 verteilt zu durchleuchtende Aussparungen angebracht sind. Eine in der Reflektorschale 3 angeordnete Leuchtdiode 4 strahlt ihr Licht gegen eine vorzugsweise lotrecht zum Zifferblatt 1 angeordnete Reflektorwand 5 ab. Beginnend mit dieser ersten Reflektion wird überwiegend durch mehrfache Reflektionen an inneren Begrenzungsflächen der Reflektorschale 3, insbesondere an ihrem zur Rückseite des Zifferblattes 1 hin gewölbten Boden 6, das von der Leuchtdiode 4 abgestrahlte Licht über den gesamten Durchlichtbereich 2 des Zifferblattes 1 gestreut, Wie es exemplarisch für einige Strahlengänge 7 dargestellt ist. Die Reflektorschale 3 kann vorteilhafterweise einstückig aus Kunststoff gefertigt sein. Die Innenseite der Reflektorschale 3 ist hell, vorzugsweise weiß und durch eine geeignete Oberflächenausbildung reflektiv gestaltet oder sie kann beispielsweise durch Aufbringen einer glänzenden Beschichtung verspiegelt sein.

Die **Figur 3** gibt nun noch einem Blick in die Innenseite der Reflektorschale 3. Hier ist erkennbar, daß die Reflektorwand 5 in ihrer in der Ebene des Zifferblattes 1 verlaufenden Kontur kurvenförmig ausgebildet ist, um das von der Leuchtdiode 4 entsprechend ihrem Abstrahlungswinkel abgestrahlte Licht so vollständig und gleichmäßig wie möglich gegen den sektorförmig ausgebildeten Abschnitt des Bodens 6 der Reflektorschale 3 zu reflektieren, wobei dieser Abschnitt des Bodens 6, wie es der Figur 2 zu entnehmen ist, in Richtung des Zifferblattes 1 konkav ausgebildet ist und das Licht zum Durchlichtbereich 2 des Zifferblattes 1 hin reflektiert. Die grundsätzliche Wirkungsweise dieser Anordnung zum Ausleuchten einer Anzeigevorrichtung mit einem Zifferblatt 1 wird durch einige exemplarisch eingezeichneten Strahlengänge 7 verdeutlicht.

Die gefundene Anordnung kommt mit einer einzigen Leuchtdiode 4 aus, die ihr Licht nicht direkt gegen die Rückseite des Zifferblattes1, sondern seitlich in eine Reflektorschale 3 hinein abstrahlt. Durch eine geeignete Formgebung der Reflektorschale 3 ist eine indirekte Ausleuchtung des Durchlichtbereiches 2 des Zifferblattes 1 mit einer über den gesamten Durchlichtbereich 2 praktisch gleichmäßig verteilten Lichtintensität erreichbar.

## Patentansprüche

1. Anordnung zum Ausleuchten einer Anzeigevorrichtung mit einem Zifferblatt, wobei die Rückseite des Zifferblattes (1) mit Ausnahme eines Durchlichtbereiches (2) ganzflächig opak ist und wobei dieser Durchlichtbereich (2) der Ausbildung einer Skala dient,
**dadurch gekennzeichnet**,
daß sich auf der Rückseite des Zifferblattes (1) eine Reflektorschale (3) befindet, deren Formgebung dergestalt ist, daß das von einer Leuchtdiode (4) gegen eine Reflektorwand (5) abgestrahlte Licht über den
Durchlichtbereich (2) des Zifferblattes (2) diffus verteilt wird.

2. Anordnung nach Anspruch 1,
**dadurch gekennzeichnet**,
daß die Reflektorwand (5) lotrecht zum Zifferblatt (1) angeordnet ist und durch eine Wandung der Reflektorschale (3) gebildet wird, wobei die Reflektorwand (5) in ihrer in der Ebene des Zifferblattes (1) verlaufenden Kontur kurvenförmig ausgebildet ist und sie das von der Leuchtdiode (4) abgestrahlte Licht gegen einen sektorförmigen Abschnitt des Bodens (6) der Reflektorschale (3) reflektiert, wobei dieser Abschnitt des Bodens (6) zum Zifferblatt (1) gerichtet konkav ausgebildet ist und das Licht zum Durchlichtbereich (2) des Zifferblattes (1) reflektiert.

3. Anordnung nach einem der vorangegangenen Ansprüche,
**dadurch gekennzeichnet**,
daß die Reflektorschale (3) einstückig aus einem hellen, reflektiven Kunststoff gefertigt ist.

4. Anordnung nach einem der vorangegangenen Ansprüche,
**dadurch gekennzeichnet**,
daß die Reflektorschale (3) in ihrer Größe und Kontur so ausgebildet ist, daß sie im wesentlichen nur den Durchlichtbereich (2) des Zifferblattes (1) abdeckt.

5. Anordnung nach einem der vorangegangenen Ansprüche,
**dadurch gekennzeichnet**,
daß das Zifferblatt (1) rückseitig einen weißen Flächendruck aufweist.

6. Anordnung nach einem der vorangegangenen Ansprüche,
**dadurch gekennzeichnet**,
daß in der Reflektorschale (3) nur eine einzige Leuchtdiode (4) angeordnet ist.
